# EUROPÄISCHE PATENTSCHRIFT

(11) **EP 4 384 371 B1**
(45) Veröffentlichungstag und Bekanntmachung des Hinweises auf die Patenterteilung: **01.04.2026**
(21) Anmeldenummer: 22751345.4
(22) Anmeldetag: 13.07.2022
(51) Int. Cl.: B29C 55/06

(54) **STRECKVORRICHTUNG UND VERFAHREN ZUM VERSTRECKEN EINER KUNSTSTOFFFOLIE IN IHRER TRANSPORTRICHTUNG**
STRETCHING DEVICE AND METHOD FOR STRETCHING A PLASTIC FILM IN THE TRANSPORT DIRECTION THEREOF
DISPOSITIF D'ÉTIRAGE ET PROCÉDÉ POUR ÉTIRER UNE FEUILLE PLASTIQUE DANS SA DIRECTION DE TRANSPORT

(30) Priorität: 19.07.2021 DE 102021207658
(43) Veröffentlichungstag der Anmeldung: 19.06.2024
(73) Patentinhaber: Windmöller & Hölscher KG, 49525 Lengerich (DE)
(72) Erfinder: STEUTER, Henning, 49525 Lengerich (DE); GOLDENSTEIN, Jens, 49525 Lengerich (DE)
(86) Internationale Anmeldenummer: PCT/EP2022/069635
(87) Internationale Veröffentlichungsnummer: WO 2023/001664

(56) Entgegenhaltungen:
- EP-A2- 0 181 755
- EP-B1- 2 498 976
- DE-A1- 1 504 647
- DE-A1- 3 406 125
- US-A- 3 645 299

## Beschreibung

Die Erfindung betrifft eine Streckvorrichtung sowie ein Verfahren zum Verstrecken einer Kunststofffolie in ihrer Transportrichtung.

Eine solche Streckvorrichtung dient dazu, Eigenschaften einer Kunststofffolie gezielt zu beeinflussen (vgl. beispielsweise DE1504647A1). Durch eine solche Streckung wird insbesondere die Orientierung der in der Kunststofffolie (im Folgenden auch kurz als "Folie" bezeichnet) enthaltenen Moleküle verändert. Um eine Streckung herbeizuführen, umfasst die Streckvorrichtung eine erste Walze, welche mit einem ersten Antrieb antreibbar und mit einer ersten Umfangsgeschwindigkeit rotierbar ist. Weiterhin umfasst die Streckvorrichtung eine zweite Walze, welche mit einem zweiten Antrieb antreibbar und mit einer zweiten Umfangsgeschwindigkeit rotierbar ist. Im Transportweg der Kunststofffolie ist die zweite Walze stromabwärts der ersten Walze angeordnet.

Die Streckung der Kunststofffolie erfolgt nun dadurch, dass die zweite Umfangsgeschwindigkeit größer als die erste Umfangsgeschwindigkeit ist. In der Regel ist die zweite Umfangsgeschwindigkeit mindestens doppelt so groß wie die erste Umfangsgeschwindigkeit. Das Verhältnis der Umfanggeschwindigkeiten bildet auch das sogenannte Reckverhältnis der Folie.

Bei der Streckung kann es aber auch zu verschiedenen Problemen kommen. So können sich Eigenschaften der Folie, insbesondere geometrische Eigenschaften wie das Dickenprofil in einer Richtung quer zur Transportrichtung der Folie und auch die Planlage der Folie durch das Strecken verändern. Vor allem lassen sich bei gestreckten Folien Randaufdickungen beobachten bei gleichzeitig gegenüber dem Ausgangszustand verschmälerter Breite der Folie, was auch als Neck-in oder Einschnürung bezeichnet wird. Dieses führt dazu, dass die Ränder der Folie abgeschnitten werden müssen, was neben unerwünschtem Abfall auch zu hohen Kosten führt.

Die Aufgabe der vorliegenden Erfindung ist es daher, eine Streckvorrichtung und ein Verfahren vorzuschlagen, mit welchen sich zumindest ein Teil der genannten Probleme reduzieren lässt.

Erfindungsgemäß wird diese Aufgabe durch sämtliche Merkmale des Anspruchs 1 gelöst. In den abhängigen Ansprüchen sind mögliche Ausgestaltungen der Erfindung angegeben.

Gemäß der vorliegenden Erfindung ist vorgesehen, dass zumindest eine erste Elektrode, welche mit einem ersten elektrischen Potential beaufschlagbar ist und welche in dem Winkelbereich der ersten Walze, auf dem die Kunststofffolie aufliegt und/oder stromaufwärts dieses Winkelbereichs angeordnet ist, und die erste Walze mit einem zweiten elektrischen Potential beaufschlagbar ist.

Die erste und die zweite Walze sind Walzen, die jeweils teilweise von der Folie umschlungen werden. Dabei trifft die Folie jeweils an einer Anlaufkante (die nicht zwangsläufig linear ist) auf die Walze, wird über einen Winkelbereich über diese geführt und verlässt die Walze an einer Ablaufkante oder Ablösekante. Die Folie wird zwischen der Ablaufkante der ersten Walze und der Anlaufkante der zweiten Walze frei geführt und dabei gestreckt. Insbesondere bedeutet das, dass es in diesem Zwischenbereich kein weiteres Führungselement wie etwa eine weitere Walze mehr gibt. Dieser Bereich wird auch als Reckspalt bezeichnet.

Eine Elektrode im Sinne der Erfindung umfasst vorzugsweise einen elektrischen Leiter, der insbesondere ein Metall umfasst, wobei der Leiter in einem Gehäuse befestigt ist, welches zumindest teilweise aus elektrisch isolierendem Material besteht. Über das Gehäuse ist die Elektrode mit Teilen eines Maschinengestells verbunden. Der elektrische Leiter ist dabei der Folie zugewandt, wobei der Raum zwischen dem elektrischen Leiter und der Folie frei ist. Der elektrische Leiter kann in Form von mehreren Stiften, Nadeln oder sogar tellerförmig (im Folgenden als Teller bezeichnet) ausgeprägt sein, deren Enden, Spitzen oder Tellerböden in Richtung der Folie zeigen. Bevorzugt sind mehrere Stifte, Nadeln oder Teller in einer Reihe oder mehreren parallelen Reihen angeordnet, die quer zur Transportrichtung der Folie zeigen. Der Abstand der Stifte, Nadeln oder Teller ist bevorzugt geringer als 20 mm, bevorzugt geringer als 10 mm und insbesondere geringer als 5 mm, um möglichst homogene elektrische Felder auf der Oberfläche der Folie hervorzurufen. Diese Stifte, Nadeln oder Teller sind insbesondere mit einem oder mehreren Drähten miteinander verbunden. Stifte oder Drähte können an ihren der Folie zugewandten Enden sehr hohe elektrische Felder erzeugen. Es können auch ein oder mehrere Drähte vorgesehen sein, die der Folie zugewandt sind. Der Vorteil eines Drahtes ist, dass er ein homogenes elektrisches Feld hervorrufen kann. Ein Draht ist bevorzugt quer zur Transportrichtung der Folie angeordnet, kann aber auch helix- oder keilförmig gebogen sein. Auch bandartige elektrische Leiter können vorgesehen sein, die nicht aus einem Metall bestehen, sondern Materialien umfassen, die eine deutlich geringere Leitfähigkeit als Metall aufweisen. Zusätzlich oder alternativ kommen auch leitfähige Keramiken als elektrische Leiter in Elektroden in Frage.

Eine Elektrode umfasst ferner eine elektrische Zuführleitung und/oder einen elektrischen Anschluss. Eine Elektrode kann eine Aufladeelektrode sein, welche keine oder nur in geringem Maße Ladungsträger abgibt bzw. aufnimmt, oder eine Entladeelektrode sein, welche Ladungsträger gewollt abgibt und damit direkt die Folie elektrisch aufladen kann.

Im Rahmen der Erfindung wird unter dem Begriff "elektrischer Leiter" oder der Begriff "elektrisch leitend" verstanden, dass eine elektrische Leitfähigkeit von mindestens 1 S/m (Siemens pro Meter) bezeichnet. Liegt die Leitfähigkeit darunter, wird im Rahmen der Erfindung von "Nichtleiter" bzw. "isolierendem Material" gesprochen.

Mittels eines elektrischen Generators lässt sich die Elektrode mit einer elektrischen Ladung beaufschlagen, die insbesondere veränderbar ist. Die elektrische Ladung kann grundsätzlich positiv oder negativ sein oder durch Beaufschlagung mit Wechselstrom auch periodisch die Polarität wechseln. Mit der Beaufschlagung mit einer elektrischen Ladung wird die Elektrode mit einem elektrischen Potential gegenüber der Umgebung beaufschlagt.

Es können mehrere erste Elektroden vorgesehen sein. Das bedeutet, dass in Transportrichtung der Folie mehrere erste Elektroden hintereinander angeordnet sein können, um den weiter unten beschriebenen Einfluss auf die Folie zu verstärken. Alle Elektroden können das gleiche elektrische Potential haben. Es kann jedoch insbesondere vorgesehen sein, die ersten Elektroden mit unterschiedlichen Potentialen zu beaufschlagen, um so den Einfluss auf die Folie genauer steuern zu können.

Gemäß der Erfindung ist weiterhin vorgesehen, dass die erste Walze ebenfalls mit einem elektrischen Potential beaufschlagbar ist. Vorzugsweise ist das elektrische Potential der Walze von dem der Elektrode unterschiedlich, so dass zwischen Elektrode und Walze eine elektrische Spannung entsteht, die ein elektrisches Feld hervorruft. Insbesondere ist die erste Walze jedoch geerdet, so dass das elektrische Potential gleich Null ist, also auf Umgebungspotential liegt. Zu diesem Zweck ist es vorteilhaft, wenn die Walze elektrisch leitend ausgebildet ist.

Alle im Rahmen dieser Offenbarungen beschriebenen Walzen können zumindest teilweise als elektrisch leitend ausgebildet sein, so dass das elektrische Potential an ihrer Außenoberfläche entsteht. Elektrisch leitende Bauteile, die zur Umgebung und insbesondere zu einem Generator führen, können ein Drehlager der Walze oder einen Schleifkontakt umfassen. Insbesondere eine Erdung kann auch erfolgen, indem Ströme über eine Temperierflüssigkeit zum Temperieren der Walze bzw. des Walzeninneren geleitet werden. Alle beschriebenen Walzen können zudem mit einer Beschichtung versehen sein, um Beschädigungen, insbesondere Kratzer, der Folie zu verhindern.

Insgesamt führt die vorbeschriebene Anordnung dazu, dass auf die Folie ein elektrisches Feld wirkt, welches innerhalb der Folie, die in der Regel nichtleitend ist, eine elektrische Ladungsverschiebung induziert. Alternativ oder zusätzlich kann die Folie mit elektrischen Ladungen beaufschlagt werden, also elektrische Ladungsträger beigefügt oder entnommen werden. Dabei wird die Folie (zusätzlich) mit einer elektrischen Kraft auf der Oberfläche der ersten Walze gehalten. Dies führt dazu, dass die Folie insbesondere in ihren Randbereichen über den vollen Winkelbereich geführt wird. Die oft vor der Ablösekante einsetzende Einschnürung oder die Randaufdickung können dadurch reduziert werden. Ist die Elektrode im Bereich nahe der oder sogar stromaufwärts der ersten Walze und insbesondere der Anlaufkante der ersten Walze angeordnet, so führt die zusätzliche elektrische Kraft in Richtung auf die Walze dazu, dass weniger durch die Folie mitgeschleppte Luft in den Bereich zwischen Folie und Walze eindringen kann. Die gegenüber dem Stand der Technik verringerte Luftmenge verbessert nochmals den Effekt der verringerten Randaufdickung und Einschnürung.

Erfindungsgemäß ist vorgesehen, dass zumindest eine zweite Elektrode, welche mit einem dritten elektrischen Potential beaufschlagbar ist und welche in dem Winkelbereich der zweiten Walze, auf dem die Kunststofffolie aufliegt angeordnet ist, und die zweite Walze mit einem vierten elektrischen Potential beaufschlagbar ist. Unter der Voraussetzung, dass die erste und die zweite Walze gegensinnig rotieren, bedeutet das, dass nun die Rückseite der Folie mit einem elektrischen Potential beeinflussbar ist. Die Polarität des dritten elektrischen Potentials ist dabei gegensinnig zu dem ersten elektrischen Potential, so dass der Einfluss auf die Folie nochmals verstärkt wird. Insbesondere wird erreicht, dass die Folie auch mit ihren Randbereichen möglichst sofort eine Kraft in Richtung der zweiten Walze erfährt. Folglich ist die Anlaufkante möglichst linear. Dazu ist es vorteilhaft, dass die zweite Elektrode im Bereich oder in Transportrichtung der Folie gesehen direkt hinter der Anlaufkante angeordnet ist.

Es können mehrere zweite Elektroden vorgesehen sein. Das bedeutet, dass in Transportrichtung der Folie mehrere Elektroden hintereinander angeordnet sein können, um den beschriebenen Einfluss auf die Folie zu verstärken. Alle zweiten Elektroden können das gleiche elektrische Potential haben. Es kann jedoch insbesondere vorgesehen sein, die zweiten Elektroden mit unterschiedlichen Potentialen zu beaufschlagen, so dass der Einfluss auf die Folie genauer gesteuert werden kann.

Vorteilhaft ist es ferner, wenn zumindest eine dritte Elektrode vorgesehen ist, welche mit einem fünften elektrischen Potential beaufschlagbar ist und welche in dem Winkelbereich der zweiten Walze, auf dem die Kunststofffolie aufliegt, und stromabwärts, der zweiten Elektrode angeordnet ist, wobei das fünfte elektrische Potential eine im Vergleich zum dritten Potential umgekehrte Polarität aufweist. Dabei kann das Potential allerdings einen abweichenden Betrag haben. Der Vorteil einer dritten Elektrode ist, dass die Ladungsverschiebung innerhalb der Folie, welche durch die erste Elektrode und - falls vorgesehen - durch die zweite Elektrode hervorgerufen wird, zumindest teilweise wieder rückgängig gemacht werden kann. Im Folgenden wird daher auch von einer Kompensationsladung gesprochen. Damit wird die Folie im Bereich der Ablösekante der zweiten Walze nicht mehr mit einer elektrischen Kraft in Richtung der Walze beaufschlagt, wodurch sie sich leicht ablösen lässt. In der Regel rotieren Folgewalzen zur zweiten Walze mit vergleichbaren Umfangsgeschwindigkeiten, so dass nur eine geringe Zugkraft auf die Folie einwirkt. Grundsätzlich ist das Vorsehen einer Elektrode zur Kompensation der Aufladung der Folie auch im Zusammenwirken mit einer anderen als der zweiten Walze denkbar.

In einer weitere Vorteile bietenden Ausführungsform der Erfindung ist zumindest eine vierte Elektrode vorgesehen, welche mit einem sechsten elektrischen Potential beaufschlagbar ist, wobei die vierte Elektrode stromabwärts der zweiten Walze angeordnet ist. Dabei wird ermöglicht, die Folie von beiden Seiten mit einer Kompensationsladung zu beaufschlagen, wenn beidseitig der Folie jeweils zumindest eine Elektrode vorgesehen ist, so dass die Ladungsverschiebung innerhalb der Folie vollständig kompensierbar ist. Danach kann die Folie ladungsfrei weiterverarbeitet, beispielsweise aufgewickelt werden. Auch Messeinrichtungen zur Charakterisierung der Folie können unbeeinflusst von elektrischen Ladungen betrieben werden. Die zumindest eine vierte Elektrode wird bevorzugt mit einem in der Polarität periodisch wechselndem Potential beaufschlagt, so dass eine Wechselspannung hervorgerufen wird. Dies kompensiert besonders zuverlässig die Aufladung der Folie. Auf einer Seite oder auf beiden Seiten der Folie können wiederum mehrere vierte Elektroden vorgesehen sein, wobei wiederum sich die elektrischen Potentiale unterscheiden können, wie es bereits im Zusammenhang mit den ersten, den zweiten und den dritten Elektroden beschrieben wurde. Die vierten Elektroden werden bevorzugt mit einem Potential beaufschlagt, so dass gegenüber der Erde eine Spannung zwischen 1 und 10 kV (Kilovolt) erzeugt wird.

In einer weiteren Ausgestaltung der Erfindung ist wenigstens ein Messgerät zum Messen der elektrischen Ladung und/oder der elektrischen Spannung der Folie vorgesehen, um die Ladung der Folie an einer oder an beiden Seiten (Vorder- und/oder Rückseite) messen zu können. Ein Messgerät kann dabei eine sich in Querrichtung der Folie erstreckende Messleiste mit mehreren einzelnen Messpunkten oder mit einem sich über die gesamte Querrichtung erstreckenden Messelement sein. Es können aber auch ein einzelner oder eine Gruppe von Messpunkten vorgesehen sein, welche mittels einer Traversiereinrichtung traversierend über die Folie bewegbar sind. Solche Traversiereinrichtungen sind dem Fachmann aus Messgeräten zum Messen von Foliendickenprofilen bekannt.

Das Messergebnis kann beispielsweise dazu verwendet zu werden, um die Kompensationsladung zu steuern oder gar zu regeln. Auch ein Teil oder alle Elektroden können hinsichtlich des eingestellten Potentials gesteuert oder geregelt werden. Während die Steuerung durch das Bedienpersonal erfolgen kann, ist für die Regelung ein Rechen- und Steuergerät vorteilhaft, welches die Messergebnisse wiederholt mit Sollwerten vergleicht und bei Abweichungen oberhalb eines Toleranzbereichs die Beaufschlagung zumindest eines Teils der Elektroden mit elektrischen Potentialen und/oder mit elektrischen Strömen anpasst. Bei dem Vergleich, der Bildung des Sollwertes und/oder der Bildung des Toleranzbereiches kann das Rechen- und Steuergerät verschiedene weitere Parameter berücksichtigen, wie etwa das Reckverhältnis der Folie, die Bahngeschwindigkeit oder intrinsische Eigenschaften der Folie (Materialzusammensetzung, Anzahl der Schichten, Gesamtdicke etc.). Auch andere Messwerte, wie etwa die Messwerte der Messung der Dicke der Folie, können dabei Eingang in die Regelparameter haben.

In einer vorteilhaften Ausgestaltung der Erfindung ist zumindest ein Teil der vorgenannten Elektroden mit einer Spannung gegen Erde zwischen 5 und 60 kV beaufschlagbar. Bei diesen Spannungen werden die Elektroden mit einem elektrischen Strom vorzugsweise zwischen 1 und 50 mA versorgt.

Für jede Elektrode können ein oder insbesondere mehrere Hochspannungsgeneratoren vorgesehen sein. Mehrere Generatoren wirken hier wirkungsverstärkend. Im Zusammenhang mit der vorstehend beschriebenen Steuerung oder Regelung kann vorgesehen sein, dass zumindest ein erster Generator hinsichtlich seiner Spannung gesteuert und zumindest ein zweiter Generator hinsichtlich seines Ladestroms geregelt wird. Dies führt zu stabileren Regelungen.

Eine bevorzugte Ausgestaltung der Erfindung beinhaltet, dass zumindest ein Teil der Elektroden hinsichtlich ihrer wirksamen Breite einstellbar ist. Das bedeutet, dass sich die Wirksamkeit, also die Beaufschlagung mit einem Potential, nicht über die gesamte Breite der Walze erstreckt, sondern nur in einem Teilbereich davon. Zudem ist es damit auch möglich, die wirksame Breite an die Breite der Folie anzupassen. Damit wird die Beaufschlagung der Folie vor allem in den Randbereichen ermöglicht und effektiver gestaltet.

Um diese Vorteile zu realisieren, kann vorgesehen sein, Nadeln, Stifte oder einzelne Drähte, von denen jeweils ein elektrisches Feld ausgeht, einzeln oder in Gruppen zu beschalten, so dass ein Ein- oder Abschalten von Teilen der Elektroden möglich ist. Auch können elektrisch isolierende Abdeckungen vorgesehen sein, die zwischen den genannten elektrischen Leitern und der Folie einschiebbar sind. Diese können beispielsweise Kunststoffplatten sein, die am Elektrodengehäuse anordenbar sind. Zur Realisierung der vorgenannten Vorteile können auch isolierende Abdeckelemente vorgesehen sein, mit welchen Teilbereiche der Walze oder der Folie abdeckbar sind. Solche Abdeckelemente können am Maschinengestell direkt oder indirekt angeordnet sein, beispielsweise lösbar und/oder verschiebbar befestigt. Es kann alternativ oder zusätzlich vorgesehen sein, einzelne oder Gruppen von elektrischen Leitern an Trägerelemente zu befestigen, wobei jeweils zwei Trägerelemente in Querrichtung der Folie gegeneinander verlagerbar angeordnet sein können. Es können anstelle einer Elektrode auch zwei getrennte Elektroden, die jeweils kleiner als die Breite der Walze, aber gleich oder größer als die halbe Walzenbreite sind, nebeneinander und in Transportrichtung der Folie leicht versetzt angeordnet sein. Diese Elektroden bilden dann ein Elektrodenpaar und können gegeneinander in Querrichtung der Folie verschiebbar sein, so dass sich das Elektrodenpaar an verschiedene Folienbreiten anpassen lässt.

Es ist auch denkbar, dass eine Elektrode vorgesehen ist, welche eine kleinere Breite aufweist als die Breite der Walze. Eine solche Elektrode kann in axialer Richtung der Walze verschiebbar gelagert sein und während des Betriebes periodisch parallel zur Walzenachse hin und her bewegt werden (Changieren).

Um eine effektivere Beaufschlagung der Randbereiche der Folie mit einem elektrischen Potential zu erreichen, kann vorgesehen sein, dass die Elektrode nur in einem dieser Randbereiche angeordnet ist. Für eine Anpassung an die Folienbreite kann selbstverständlich diese Elektrode in Querrichtung zur Transportrichtung der Folie verschiebbar gelagert sein.

In einer vorteilhaften Weiterbildung der Erfindung ist vorgesehen, dass der Abstand zumindest einer der Elektroden zur Folie veränderbar ist. Wenn die Elektrode im Bereich einer der Walzen angeordnet ist, ist damit eine Veränderung in radialer Richtung der Walze gemeint. Verläuft in dem Bereich, in dem die Elektrode angeordnet ist, die Folie entlang einer Ebene, ist eine Veränderung in der Richtung orthogonal zur Ebene der Folie gemeint. Anstelle der gesamten Elektrode können auch Teile der Elektrode radial verschieblich sein. Das bedeutet, dass unterschiedliche Teilabschnitte der Elektrode in Querrichtung zur Transportrichtung der Folie unterschiedliche Abstände zur Folie einnehmen können. Damit kann auf unterschiedliche Eigenschaften der Folie in deren Querrichtung besser reagiert werden. Mit einer Veränderung des Abstands der Elektrode oder deren Teilbereiche zur Folie kann nicht nur die an der Folie anliegende Spannung variiert werden, sondern auch der Verlauf des elektrischen Feldes an der Folie. Eine Veränderung des Abstands kann mittels Einstellmitteln erfolgen, welche beispielsweise eine Verschiebung der Elektrode entlang von Schienen ermöglichen. Eine Veränderung des Abstands kann durch eine manuelle, aber auch durch eine automatische, d. h. motorische Einflussnahme erfolgen. Insbesondere bei einer automatischen Veränderung kann die Veränderung des Abstandes durch das Rechen- und Steuergerät, insbesondere durch die Steuerung im Rahmen einer Regelung, steuerbar sein.

Ferner ist es vorteilhaft, wenn das Gehäuse und damit die elektrischen Leiter der Elektrode in ihrer Winkelposition relativ zur Senkrechten auf der Folie veränderbar sind. Man kann also sagen, dass, wenn man in die Ebene der Folie hineinschaut, die Elektroden nach rechts oder links kippbar sind. Damit kann man die Form des elektrischen Feldes auf der Oberfläche der Folie verändern. Insbesondere bei sehr kleinen Reckspalten kann damit das elektrische Feld besser in den Reckspalt gebracht werden. Auch eine Veränderung der Winkelposition der Elektrode kann manuell oder automatisch, insbesondere als Bestandteil einer Regelung, durchgeführt werden.

Ferner ist es vorteilhaft, wenn die Elektrode, wenn sie im Bereich einer der Walzen angeordnet ist, in Umfangrichtung der Walze schwenkbar gelagert sein. Bei variablen Walzenpositionen, insbesondere der ersten und der zweiten Walze, können sich die Position der Anlaufkante und/oder der Ablösekante verändern. Mit der genannten Maßnahme wird es ermöglicht, die Elektrode näher an die Anlaufkante oder an die Ablösekante zu bringen.

Vorteilhaft ist es, wenn die Elektrode in eine Reinigungs- und/oder Anfahrposition bringbar ist, in der die Elektrode einen großen Abstand von mindestens 50 cm zur Walzenoberfläche oder zum Transportweg der Folie zwischen zwei Walzen bringbar ist. Damit wird das Reinigen der Walze und/oder das Einziehen der Folie in die Streckvorrichtung im Rahmen des Anfahrens der Streckvorrichtung erleichtert.

Zusätzlich kann ein Antrieb vorhanden sein, um die Elektrode ohne manuellen Eingriff in die Reinigungs- und/oder Anfahrposition zu bringen. Auch die anderen, weiter oben beschriebenen Positionsveränderungen der Elektrode können ohne manuellen Eingriff durch wenigstens einen Antrieb erfolgen. Eine Positionsveränderung kann von dem Rechen- und Steuergerät ausgelöst werden, beispielsweise, wenn über einen Bahnrisssensor ein Bahnriss detektiert wird.

In der erfindungsgemäßen Streckvorrichtung kann eine Reinigungseinheit zum Reinigen der Umfangsfläche zumindest einer Walze vorgesehen sein. Durch eine regelmäßige Messung des Stroms zur oder innerhalb wenigstens einer Elektrode und/oder zu oder innerhalb wenigstens einer Walze können Unregelmäßigkeiten festgestellt werden. So kann eine über die Zeit ermittelte Veränderung des Stroms einen Hinweis auf eine Verschmutzung einer der Walzen oder einer der Elektroden liefern. Dieser Hinweis ist dem Bedienpersonal auf einer Anzeigevorrichtung anzeigbar, so dass das Bedienpersonal eine Reinigung veranlassen oder durchführen kann.

Schließlich kann die Elektrode zur Feinpositionierung noch um die Orthogonale der Folie drehbar sein.

In einer erfindungsgemäßen Streckvorrichtung können Maschinengestellelemente vorgesehen sein, in welchen Anlegewalzen lagerbar und entfernbar sind. Zusätzlich kann in diesem Fall vorgesehen sein, dass zumindest ein Teil der Elektroden austauschbar ist. Mit dieser Maßnahme kann zumindest eine Elektrode gegen eine Anlegewalze austauschbar sein. Die Funktionsweise von Anlegewalzen ist in der Patentschrift EP 2 498 976 B1 offenbart, die hiermit als in dieser Anmeldung aufgenommen gilt. Der Vorteil ist, dass auch für verschiedene Folientypen das optimale Mittel zur Reduzierung des Neck-ins und der Einschnürung innerhalb einer Streckvorrichtung verwendbar ist. Eine Anlegewalze kann insbesondere an der Anlaufkante einer der Walzen oder beider Walzen, vorzugsweise der ersten Walze vorgesehen sein, um das weiter oben bereits beschriebene Einschleppen von Luft zwischen der Folie und der Walze zu minimieren.

In einer weiteren vorteilhaften Ausführungsform der Erfindung ist vorgesehen, dass die erste und/oder die zweite Walze in ihrer Oberfläche Öffnungen umfasst, welche mit einem Unterdruck beaufschlagbar sind. Damit lässt sich die Kraft, die auf die Folie in Richtung der Walzenoberfläche wirkt, nochmals vergrößern, so dass die positiven Effekte der Erfindung nochmals stärker, insbesondere in Abhängigkeit der Eigenschaften der Folie, hervortreten können. Wenn eine solche Walze eine weiter oben beschriebene Beschichtung aufweist, ist zusätzlich vorgesehen, dass diese Beschichtung luftdurchlässig ist.

Eine erfindungsgemäße Streckvorrichtung ist besonders vorteilhaft mit einer Blasfolienanlage kombinierbar, aber auch mit einer Gießfolienanlage. Bei diesen Anlagen ist es möglich, bereits bei der Folienherstellung aus Kunststoffschmelzen durch eine passende Regelung oder Steuerung des Folienprofils die Randverdickung und/oder das Neck-in und damit diesen Effekt innerhalb der Streckvorrichtung zu beeinflussen. In die Regelung oder Steuerung des Folienprofils können die Eigenschaften der Elektroden und/oder der Walzen und deren elektrische Betriebsparameter berücksichtigbar sein. Umgekehrt können Maschinen- und Herstellparameter der Folie innerhalb der Blasfolien- oder Flachfolienmaschine für die Einstellung der elektrischen Parameter innerhalb der Streckvorrichtung verwendet werden, insbesondere wenn diese elektrischen Parameter durch das Rechen- und Steuergerät gesteuert werden.

Die erfindungsgemäße Streckvorrichtung kann aber auch eine Folie, die als auf eine Rolle aufgewickelte Folie bereitgestellt und in einer Abwickeleinrichtung abgewickelt wird, vorteilhaft verarbeiten. Zu jeder Rolle können die Folienparameter, beispielsweise in einem Rollenprotokoll, gespeichert und dem Rechen- und Steuergerät der Streckvorrichtung zuführbar sein. Damit können für jede Position der Folie entlang ihrer Längsrichtung elektrische Maschinen- und/oder Betriebsparameter einstellbar sein, um die oben genannte Aufgabe bestmöglich zu erfüllen.

In der Streckvorrichtung verarbeitbare Folien können beispielsweise so genannte "breathable films" (also Folien mit Durchgangsöffnungen zum gezielten Durchlassen von Gasen), aber auch Barrierefolien sein. Folien können aber insbesondere auch verblockte oder unverblockte, polyethylenhaltige Folien sein.

Die oben genannte Aufgabe wird zusätzlich gelöst durch ein Verfahren zum Verstrecken einer Kunststofffolie in ihrer Transportrichtung, wobei die Kunststofffolie über eine erste Walze (SD) geführt wird, wobei die Walze mit einem ersten Antrieb getrieben wird und mit einer ersten Umfangsgeschwindigkeit rotiert, und wobei die Kunststofffolie über eine zweite Walze (FD) geführt wird, wobei die Walze mit einem zweiten Antrieb getrieben wird und mit einer zweiten Umfangsgeschwindigkeit rotiert, wobei die zweite Umfangsgeschwindigkeit größer als die erste Umfangsgeschwindigkeit ist, wobei im Transportweg der Kunststofffolie die zweite Walze stromabwärts der ersten Walze angeordnet ist, so dass die Kunststofffolie im freien Bereich zwischen der ersten und der zweiten Walze gestreckt wird.

Das erfindungsgemäße Verfahren zeichnet sich dadurch aus, dass die Kunststofffolie in dem Winkelbereich der ersten Walze, auf dem die Kunststofffolie aufliegt und/oder stromaufwärts dieses Winkelbereichs mittels zumindest einer ersten Elektrode mit einem elektrischen Feld beaufschlagt wird, wobei die Elektrode mit einem ersten elektrischen Potential beaufschlagt wird, und dass die erste Walze mit einem zweiten elektrischen Potential beaufschlagt wird. Mit dem erfindungsgemäßen Verfahren werden die gleichen Vorteile erzielt, wie sie bereits im Zusammenhang mit der erfindungsgemäßen Streckvorrichtung erläutert worden sind.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Streckvorrichtung und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: Schematische Ansicht einer erfindungsgemäßen Streckeinrichtung
- Fig. 2: Eine Ausschnittvergrößerung aus der Figur 1
- Fig. 3: Eine Blasfolienanlage mit einer erfindungsgemäßen Streckeinrichtung
- Fig. 4: Eine weitere erfindungsgemäße Blasfolienanlage mit einer Streckeinrichtung

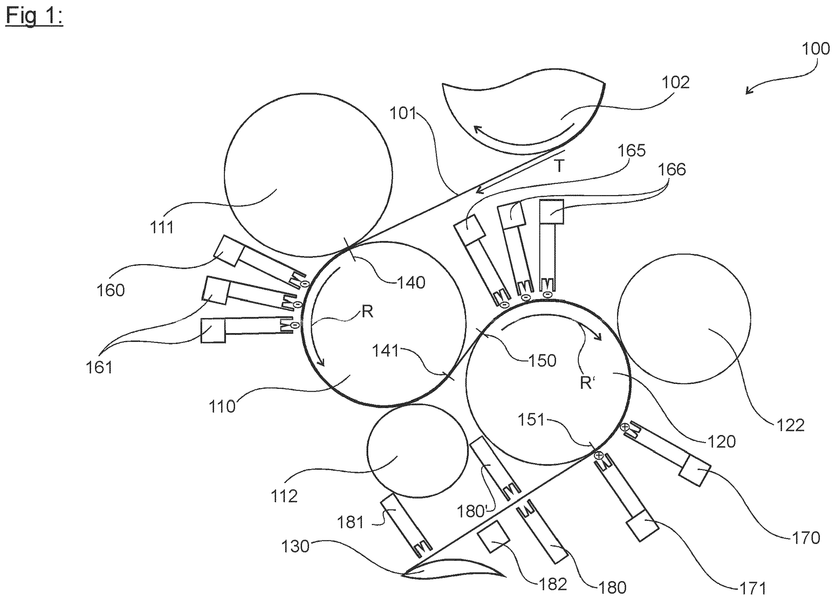

Die **Figur 1** zeigt eine schematische Darstellung einer erfindungsgemäßen Streckvorrichtung 100. Die bahnförmige Kunststofffolie 101 läuft in Transportrichtung T in die Streckvorrichtung 100 ein. Die Kunststofffolie läuft zunächst auf eine oder nacheinander auf mehrere Vorheizwalzen auf, von welchen nur eine Vorheizwalze 102 gezeigt ist. Eine Vorheizwalze hat die Aufgabe, die Folie auf eine vordefinierte Temperatur zu bringen. Dazu ist eine Vorheizwalze in der Regel temperiert, wobei oft ein temperiertes Fluid in die Vorheizwalze eingebracht wird.

Nach dem Verlassen der Vorheizwalze(n) 102 gelangt die Folienbahn 101 auf eine erste Walze 110, welche generell auch als erste Streckwalze 110 bezeichnet werden kann. Diese Streckwalze ist mit einem nicht dargestellten Antrieb verbunden, beispielsweise einem eigenen Elektromotor, welcher die Walze 110 mit einer ersten Umgangsgeschwindigkeit in die Richtung des Pfeils R rotierend antreibt. Diese Walze kann auch als SD-Walze (SD steht für "slow drive) bezeichnet werden. Die Folie läuft an der Anlaufkante 140 auf die erste Walze 110 auf. Im Idealfall verläuft diese Anlaufkante 140 senkrecht als Linie in die Zeichenebene hinein. In der Praxis weicht die Anlaufkante von einer Geraden häufig ab.

Der ersten Walze 110 ist vorzugsweise eine erste Anlegewalze 111 zugeordnet, welche zusammen mit der ersten Walze 110 einen Einlaufspalt für die Folie zur Verfügung stellt. Vorzugsweise ist der Einlaufspalt oder der Laufweg der Folie 101 derart eingerichtet, dass diese 101 in dem Einlaufspalt tangential zu den Walzen 110, 111 läuft. Mit anderen Worten fällt der Einlaufspalt mit der Anlaufkante zusammen. Der Walzenspalt dient bereits dazu, die Luft zwischen der Streckwalze 110 und der Folie 101 zu minimieren. Der Walzenspalt dient zudem dazu, die Anlaufkante geradliniger zu gestalten.

Der ersten Walze 110 ist optional noch eine zweite Anlegewalze 112 zugeordnet, welche einen Auslaufspalt mit der Walze 110 bildet. Die zweite Anlegewalze 112 kann in Umfangsrichtung der ersten Walze 110 verstellbar sein. Die zweite Anlegewalze 112 dient dazu, dass die Folie die ersten Walze 110 entlang einer Linie, die parallel zur axialen Richtung der Walze 110 verläuft, verlässt. Die tatsächliche Ablösekante 141 liegt jedoch aus Platzgründen oft hinter der zweiten Anlegewalze 112. Die Folie läuft an der Anlaufkante 140 von der ersten Walze 110 ab. Im Idealfall verläuft diese Ablösekante 141 senkrecht als Linie in die Zeichenebene hinein. In der Praxis weicht aber auch die Ablösekante von einer Geraden häufig ab. Insbesondere diese Abweichungen führen zu den eingangs beschriebenen Effekten der Randaufdickung und des Neck-ins.

Der Bereich zwischen der Anlaufkante 140 und der Ablösekante 141 ist der Winkelbereich der Walze 110, auf dem die Folie aufliegt, also der Umschlingungswinkel der ersten Walze 110.

In Transportrichtung T der Folie 101 gesehen ist stromabwärts eine zweite Walze 120 angeordnet, welche als zweite Streckwalze 120 bezeichnet werden kann. Auch diese Streckwalze 120 ist mit einem nicht dargestellten, weiteren Antrieb verbunden, beispielsweise einem eigenen Elektromotor, welcher die Walze 120 mit einer zweiten Umfangsgeschwindigkeit in Richtung des Pfeils R' rotierend antreibt. Die zweite Streckwalze hat dabei eine größere Umfangsgeschwindigkeit als die erste Streckwalze, weshalb sie auch als FD-Walze (FD steht für "fast drive") bezeichnet werden kann. Dies führt dazu, dass die Folie 101 zwischen der Ablösekante 141 der ersten Walze 110 und der Anlaufkante 150 der zweiten Walze 120 im Verhältnis der Umfangsgeschwindigkeiten in ihrer Transportrichtung gestreckt wird. Die Strecke zwischen dem Auslaufspalt und der Einlaufkante wird oft auch als Streckspalt bezeichnet.

Möglich ist es, dass die erste Walze 110 und die zweite Walze 120 relativ zueinander bewegbar sind. Damit kann auf den Streckspalt Einfluss genommen werden. Eine Veränderung des Streckspalts kann die Eigenschaften der Folie beeinflussen.

Der zweiten Walze 120 ist darüber hinaus optional eine dritte Anlegewalze 122 zugeordnet, welche einen Auslaufspalt mit der Walze 120 bildet. Die dritte Anlegewalze 122 kann ebenfalls in Umfangsrichtung der zweiten Walze 120 verstellbar sein. Die dritte Anlegewalze 122 dient dazu, dass die Folie die ersten Walze 120 entlang der Ablösekante 151, die parallel zur axialen Richtung der Walze 120 verläuft, verlässt. Die tatsächliche Ablösekante 151 liegt jedoch aus Platzgründen oft hinter der dritten Anlegewalze 122. Im Idealfall verläuft diese Ablösekante 151 senkrecht als Linie in die Zeichenebene hinein. In der Praxis weicht aber auch hier die Ablösekante 151 von einer Geraden häufig ab.

Der Bereich zwischen der Anlaufkante 150 und der Ablösekante 151 ist der Winkelbereich der Walze 120, auf dem die Folie aufliegt, also der Umschlingungswinkel der ersten Walze 120.

Grundsätzlich kann in einer erfindungsgemäßen Streckvorrichtung auch auf eine oder mehrere Anlegewalzen verzichtet werden. Dennoch kann die Rede von einem Einlaufspalt oder Auslaufspalt sein.

Es können noch weitere Streckwalzen, insbesondere mit jeweils ein oder zwei Anlegewalzen, vorgesehen sein, wobei jeweils zwei unmittelbar nacheinander angeordnete Streckwalzen derart angetrieben sind, dass die jeweils stromabwärts angeordnete Streckwalze eine höhere Umfangsgeschwindigkeit aufweist als die vorhergehende Streckwalze.

Stromabwärts der Streckwalzen 110, 120 ist eine Abkühlwalze 130 angeordnet, mit welcher die Folie 101 wieder abkühlbar ist, so dass sich die durch das Strecken erfolgte neue Molekülorientierung innerhalb der Folie verfestigt.

Um die Haltekraft der Folie auf der ersten Walze zu erhöhen, kann im Bereich des Umschlingungswinkels der ersten Walze 110 oder stromaufwärts davon eine erste Elektrode 160 vorgesehen sein, welche der ihr zugewandten Seite der Folie eine elektrische Ladung hinzufügt und/oder innerhalb der Folie eine Ladungsverschiebung induziert. In der Figur 1 wird dies durch ein "-"-Zeichen in einer Ellipse symbolisiert. Einer ersten Elektrode kann eine beliebige Zahl weiterer Elektroden 161 stromabwärts nachgeordnet sein. In der Figur 1 sind zwei weitere Elektroden dargestellt. Jede der ersten Elektroden kann in Transportrichtung T der Folie vor oder hinter der optionalen Anlegewalze 112 angeordnet sein.

Gleichfalls kann im Bereich des Umschlingungswinkels der ersten Walze 120 eine zweite Elektrode 165 vorgesehen sein, welche der ihr zugewandten Seite der Folie eine elektrische Ladung hinzufügt und/oder innerhalb der Folie eine Ladungsverschiebung induziert. In der Figur 1 wird dies durch ein "-"-Zeichen in einer Ellipse symbolisiert, was bedeutet, dass die Polarität der Ladung bzw. der Ladungsverschiebung derjenigen entspricht, die durch die Elektrode 160 bzw. 161 hervorgerufen wird. Einer ersten Elektrode kann eine beliebige Zahl weiterer Elektroden 166 stromabwärts nachgeordnet sein. In der Figur 1 sind zwei weitere Elektroden dargestellt. Die zweite Elektrode 165 bzw. 166 beaufschlagen die Folie ebenfalls mit derselben Polarität wie die Elektroden 160 bzw. 161. Nun wird jedoch die Seite der Folie, die die Walze 110 kontaktiert hat, beeinflusst. Vorteilhaft ist es, wenn die Elektrode 165 möglichst nahe an der Anlaufkante 150 auf die Folie wirkt.

Stromaufwärts der Ablösekante 151 der zweiten ist eine weitere Elektrode 170 auf die Folie gerichtet, welche die Folie ebenfalls mit Ladungen beaufschlagt oder innerhalb der Folie eine Ladungsverschiebung hervorruft. Die Polarität des Potentials der Elektrode 170 ist jedoch entgegengesetzt zu denen der vorherigen Elektroden 160, 161, 165 und 166, was mit einem "+"-Zeichen dargestellt ist. Damit wird die Aufladung der Folie bzw. die Ladungsverschiebung innerhalb der Elektrode reduziert bzw. möglichst vollständig kompensiert.

Alternativ oder zusätzlich ist eine Elektrode 171 vorgesehen, welche bevorzugt im Bereich der Ablösekante 151 angeordnet ist. Ihre Wirkungsweise entspricht derjenigen der Elektrode 170.

Nachdem die Folie die zweite Walze 120 an der Ablösekante 151 verlassen hat, ist diese möglicherweise noch elektrisch aufgeladen. Um diese Aufladung abzubauen und die Folie möglichst elektrisch neutral weiter transportieren und/oder verarbeiten zu können, ist zumindest eine weitere Elektrode 180, 180' vorgesehen. Bevorzugt sind zwei weitere Elektroden einander gegenüberliegend vorgesehen, zwischen welchen die Folie transportiert wird. Im Gegensatz zu den zuvor beschriebenen Elektroden ist bevorzugt vorgesehen, dass die Elektrode 180, 180' mit einer Wechselspannung beaufschlagt wird. Weitere Elektroden 181 können vorgesehen sein, wenn die Aufladung der Folie noch nicht kompensiert werden konnte.

Um die Aufladung der Folie bestimmen zu können, ist zumindest ein Ladungsmessgerät 182 vorgesehen, welches vorzugsweise stromabwärts des Ablösepunktes 151 angeordnet ist. Diese vor oder hinter der Elektrode 180, 180' vorgesehen sein, im Falle von mehreren Ladungsmessgeräten an beiden Positionen. Es können Messgeräte 182 beidseits der Folie vorgesehen sein, um die Aufladung der Folie an beiden ihrer Oberflächen bestimmen zu können. Das Messgerät 182 kann nicht nur zur Bestimmung vorgesehen sein, ob die Ladungskompensation vollständig erfolgt ist, sondern kann auch eingerichtet sein, um an einer Oberfläche die lokale Aufladung der Folie über ihre Breite zu bestimmen.

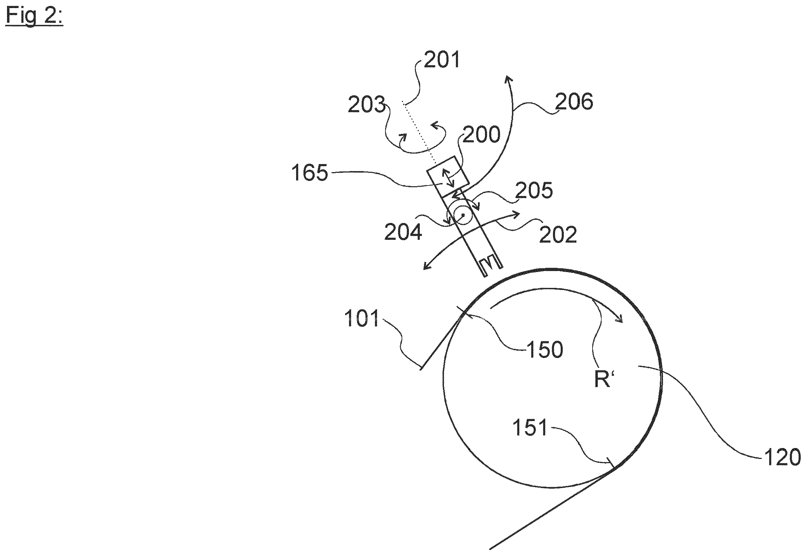

Die **Figur 2** ist eine Ausschnittvergrößerung der Figur 1 und stellt die möglichen Positionsveränderungen einer beliebigen Elektrode anhand der Elektrode 165 dar. Zunächst kann die Elektrode in einer Richtung senkrecht zur Ebene, die durch die Folie aufgespannt wird, oder, wenn die Folie auf einer Walze aufliegt, senkrecht zur Tangentialebene verschoben werden, wie es mit dem Doppelpfeil 200 dargestellt ist. Zu diesem Zweck kann in der Streckeinrichtung ein erster Verstellmechanismus vorgesehen sein, der in der Figur nicht dargestellt ist. Die Senkrechte zur Tangentialebene 201 ist punktiert dargestellt.

Um die Elektrode an bestimmte Punkte der Folie zu bringen, ist vorgesehen, die Elektrode in Transportrichtung der Folie verlagern zu können. Läuft die Folie auf einer Walze, wie es in der Figur 2 dargestellt ist, kann die Elektrode in Richtung des Umfangs der Walze 120 positionsverändert werden. Dies ist durch den Pfeil 202 gezeigt. Die Schwenkachse fällt dabei vorzugsweise mit der Drehachse der Walze 120 zusammen. Ein entsprechender Schwenkmechanismus ist vorgesehen, jedoch nicht dargestellt.

Um eine Feineinstellung zu ermöglichen, ist die Elektrode um die Senkrechte zur Tangentialebene 201 drehbar, wie es mit dem Doppelpfeil 203 verdeutlicht wird.

Zusätzlich kann die Elektrode um eine Drehachse 204 in Richtung des Doppelpfeils 205 gedreht werden, wobei diese Drehachse 204 parallel zur Ebene der Folie, aber durch die Elektrode hindurch verläuft.

Ferner kann die Elektrode um eine zweite, nicht dargestellte Schwenkachse schwenkbar sein, um die Elektrode insgesamt von der Walze entfernen zu können. Diese Maßnahme ist hilfreich, um Platz zu schaffen, wenn beispielsweise die Walze gereinigt werden muss oder eine neue Folie in die Streckvorrichtung eingezogen werden muss. Die zweite Schwenkachse liegt insbesondere parallel zur Rotationsachse, aber außerhalb der Walze und vorzugweise außerhalb der Elektrode. Daraus resultiert die Schwenkrichtung 206. Jedoch kann die zweite Schwenkachse abweichend liegen, so dass sich eine abweichende Schwenkrichtung ergibt.

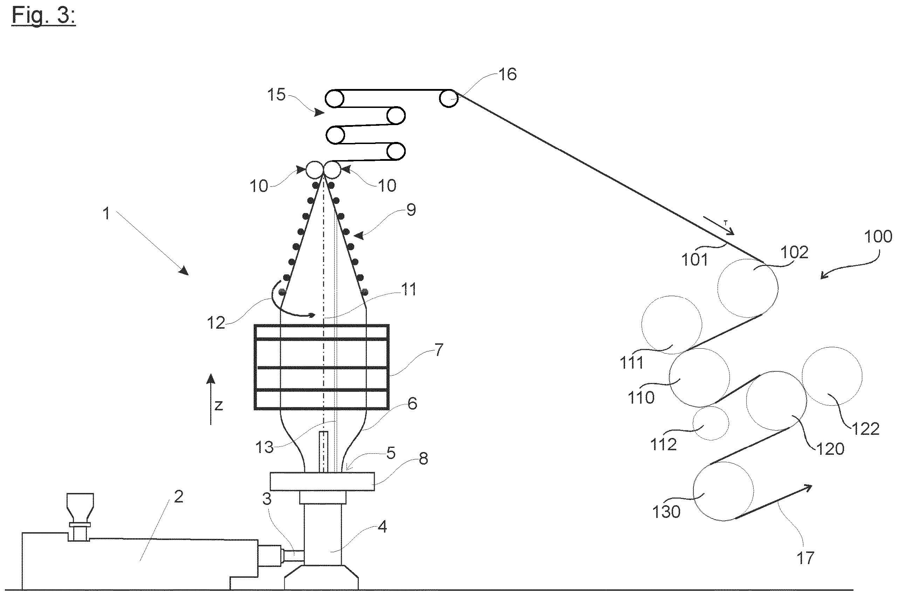

Die **Figur 3** zeigt eine Vorrichtung 1 zur Herstellung eines Folienschlauches, nämlich eine Blasfolienanlage, die zunächst wenigstens einen Extruder 2 umfasst, mit welcher beispielsweise in Granulatform vorliegender Kunststoff plastifizierbar ist. Über eine Leitung 3 wird die so erzeugte Kunststoffschmelze einem Extrusionswerkzeug 4, das auch als Düsenkopf bezeichnet werden kann, zugeführt, von dem diese Schmelze in einen Folienschlauch 6 überführt wird, so dass dieser Schmelzestrom aus einem in dieser Figur nicht sichtbaren Ringspalt 5 in Abzugsrichtung z herausziehbar ist. Nun liegt ein noch nicht verfestigter Folienschlauch 6 vor. Dieser wird von innen her durch einen leichten Überdruck aufgeblasen, so dass er innerhalb der optionalen Kalibriervorrichtung 7 einen größeren Durchmesser aufweist. Eine Verfestigung des Folienschlauches erfolgt insbesondere durch eine Temperiervorrichtung 8, die oft auch wegen ihrer ringartigen, den Folienschlauch einfassenden Ausgestaltung als Kühlring bezeichnet wird.

Nach dem Passieren der Kalibriervorrichtung gelangt der Folienschlauch 6 in den Wirkbereich einer Flachlegevorrichtung 9, in der der kreisrunde Folienschlauch in einen ellipsenförmigen Querschnitt mit einer zunehmenden Exzentrizität überführt wird, bis er schließlich im Einflussbereich der Abzugswalzen 10 eine doppellagige Kunststofffolie, die an ihren Seiten miteinander verbunden ist, bildet.

Die Flachlegeeinrichtung ist drehbar angeordnet, wobei die Drehachse im Wesentlichen mit der Schlauchachse 11, die in der Figur 1 durch eine strichpunktierte Linie angedeutet ist, fluchtet. Die Drehbarkeit der Flachlegeeinrichtung ist mit dem Pfeil 12 angedeutet.

Die Figur 3 zeigt weiterhin eine Reversiereinrichtung 15, welche die Aufgabe hat, den flachgelegten Folienschlauch von der Flachlegevorrichtung zur ortfesten Walze 16 zu führen, ohne dass Beschädigungen auftreten.

Stromabwärts der Reversiervorrichtung 15 ist nun eine erfindungsgemäße Streckvorrichtung 100 angeordnet, welche bereits im Zusammenhang mit den Figuren 1 bis 2 und der voranstehenden Beschreibung erläutert worden ist. Die in der Figur 3 dargestellte Streckvorrichtung kann derjenigen entsprechen, die in der Figur 1 gezeigt ist, wobei jedoch alle Elektroden und Messeinrichtungen nicht dargestellt sind. Es ist noch darauf hinzuweisen, dass stromaufwärts der Streckeinrichtung 100 noch eine Schneideeinrichtung positioniert sein kann, mit welcher eine oder zwei Ränder der Falz auf- oder abgeschnitten werden können. Zusätzlich kann eine Trennvorrichtung vorgesehen sein, mit welcher die doppellagige Kunststofffolie in eine oder mehrere einlagige Folien aufgeteilt werden kann.

Der Pfeil 17 deutet an, dass dieser Folienschlauch nach dem Durchlauf durch die Streckvorrichtung 100 zur Weiterverarbeitung geführt wird, welche hier nicht näher spezifiziert ist.

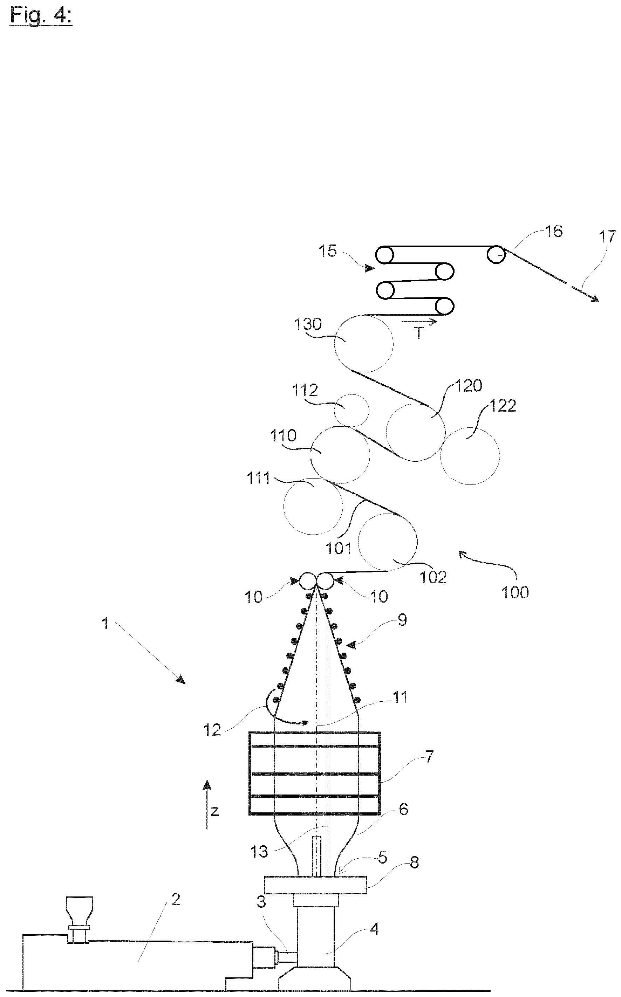

Die **Figur 4** zeigt eine weitere Ausführungsform einer erfindungsgemäßen Blasfolienanlage, bei der nun die Streckeinrichtung 100 zwischen den Abzugswalzen 10 und der Reversiervorrichtung 15 angeordnet ist. Dabei ist zu beachten, dass die Walzen innerhalb der Streckvorrichtung nun so in einer Reihenfolge angeordnet sind, dass die Kunststofffolie von unten nach oben transportiert werden kann.

| **Bezugszeichenliste** | |
|---|---|
| 100 | Streckvorrichtung |
| 101 | Kunststofffolie |
| 102 | Vorheizwalze |
| 110 | Erste Walze |
| 111 | Erste Anlegewalze |
| 112 | Zweite Anlegewalze |
| 120 | Zweite Streckwalze |
| 122 | Zweite Anlegewalze |
| 130 | Abkühlwalze |
| 140 | Anlaufkante |
| 141 | Ablösekante |
| 150 | Anlaufkante |
| 151 | Ablösekante |
| 160 | Erste Elektrode |
| 161 | Weitere Elektroden |
| 165 | Zweite Elektrode |
| 166 | Weitere Elektroden |
| 170 | Elektrode |
| 171 | Elektrode |
| 180 | Elektrode |
| 180' | |
| 181 | Elektrode |
| 182 | Ladungsmessgerät |
| 200 | Doppelpfeil |
| 201 | Tangentialebene |
| 202 | Pfeil |
| 203 | Doppelpfeil |
| 204 | Drehachse |
| 205 | Doppelpfeil |
| 206 | Schwenkrichtung |
| | |
| | |
| 1 | Vorrichtung zur Herstellung eines Folienschlauches |
| 2 | Extruder |
| 3 | Leitung |
| 4 | Extrusionswerkzeug |
| 5 | Nicht sichtbarer Ringspalt |
| 6 | Noch nicht verfestigter Folienschlauch |
| 7 | Optionale Kalibriervorrichtung |
| 8 | Temperiervorrichtung |
| 9 | Flachlegevorrichtung |
| 10 | Abzugswalzen |
| 11 | Schlauchachse |
| 12 | Pfeil zur Verdeutlichung der Drehbarkeit der Flachlegeeinrichtung |
| 13 | |
| 14 | |
| 15 | Reversiereinrichtung |
| 16 | Ortsfeste Walze |
| 17 | Pfeil zur Andeutung der Weiterverarbeitung |
| R R' | Pfeil |
| T | Transportrichtung |
| Z | Abzugsrichtung |
| | |

## Patentansprüche

1. Streckvorrichtung (1) zum Verstrecken einer Kunststofffolie (101) in ihrer Transportrichtung (T)
mit einer ersten Walze (SD) (110), über welche die Kunststofffolie (101) führbar ist und welche mit einem ersten Antrieb antreibbar und mit einer ersten Umfangsgeschwindigkeit rotierbar ist, und
mit einer zweiten Walze (FD) (120), über welche die Kunststofffolie (101) führbar ist und welche mit einem zweiten Antrieb antreibbar und mit einer zweiten Umfangsgeschwindigkeit rotierbar ist, wobei die zweite Umfangsgeschwindigkeit größer als die erste Umfangsgeschwindigkeit ist, wobei im Transportweg der Kunststofffolie (101) die zweite Walze (120) stromabwärts der ersten Walze (110) angeordnet ist, so dass die Kunststofffolie im freien Bereich zwischen der ersten und der zweiten Walze streckbar ist, wobei zumindest eine erste Elektrode (160), welche mit einem ersten elektrischen Potential beaufschlagbar ist und welche in dem Winkelbereich der ersten Walze (110), auf dem die Kunststofffolie (101) aufliegt und/oder stromaufwärts dieses Winkelbereichs angeordnet ist und dass die erste Walze (110) mit einem zweiten elektrischen Potential beaufschlagbar ist, **dadurch gekennzeichnet, dass**
zumindest eine zweite Elektrode (165), welche mit einem dritten elektrischen Potential beaufschlagbar ist und welche in dem Winkelbereich der zweiten Walze (120), auf dem die Kunststofffolie (101) aufliegt angeordnet ist und **dass** die zweite Walze (120) mit einem vierten elektrischen Potential beaufschlagbar ist, wobei die Polarität des dritten elektrischen Potentials gegensinnig zu dem ersten elektrischen Potential ist, wobei die erste und die zweite Walze gegensinnig rotieren, so dass die Rückseite der Folie (101) mit dem dritten elektrischen Potential beaufschlagbar ist.

2. Streckvorrichtung (100) nach Anspruch 1,
**dadurch gekennzeichnet, dass**
zumindest eine dritte Elektrode vorgesehen ist, welche mit einem fünften elektrischen Potential beaufschlagbar ist und welche in dem Winkelbereich der zweiten Walze (120), auf der die Kunststofffolie (101) aufliegt und stromabwärts der zweiten Elektrode (165) angeordnet ist, wobei das fünfte elektrische Potential eine im Vergleich zum dritten Potential umgekehrte Polarität aufweist.

3. Streckvorrichtung (100) nach Anspruch 1 oder 2,
**dadurch gekennzeichnet, dass**
zumindest eine vierte Elektrode, welche mit einem sechsten elektrischen Potential beaufschlagbar ist, vorgesehen ist, wobei die vierte Elektrode stromabwärts der zweiten Walze (120) angeordnet ist.

4. Streckvorrichtung (100) nach einem der vorstehenden Ansprüche,
**dadurch gekennzeichnet, dass**
der Abstand zumindest einer der Elektroden zur Folie (101) veränderbar ist.

5. Streckvorrichtung (100) nach einem der vorstehenden Ansprüche,
**dadurch gekennzeichnet, dass**
die Breite zumindest einer der Elektroden variierbar ist.

6. Streckvorrichtung (100) nach einem der vorstehenden Ansprüche,
**dadurch gekennzeichnet, dass**
die Winkelposition zumindest einer der Elektroden, welche in einem Winkelbereich einer der Walzen, auf dem die Kunststofffolie aufliegt, angeordnet sind, veränderbar ist.

7. Verfahren zum Verstrecken einer Kunststofffolie (101) in ihrer Transportrichtung (T),
wobei die Kunststofffolie (101) über eine erste Walze (SD) (110) geführt wird, wobei die Walze (110) mit einem ersten Antrieb getrieben wird und mit einer ersten Umfangsgeschwindigkeit rotiert, und
wobei die Kunststofffolie (101) über eine zweite Walze (FD) (120) geführt wird, wobei die Walze (120) mit einem zweiten Antrieb getrieben wird und mit einer zweiten Umfangsgeschwindigkeit rotiert, wobei die zweite Umfangsgeschwindigkeit größer als die erste Umfangsgeschwindigkeit ist,
wobei im Transportweg der Kunststofffolie (101) die zweite Walze (120) stromabwärts der ersten Walze (110) angeordnet ist, so dass die Kunststofffolie (101) im freien Bereich zwischen der ersten und der zweiten Walze gestreckt wird, wobei die Kunststofffolie (101) in dem Winkelbereich der ersten Walze (110), auf dem die Kunststofffolie (101) aufliegt und/oder stromaufwärts dieses Winkelbereichs mittels zumindest einer ersten Elektrode (160) mit einem elektrischen Feld beaufschlagt wird, wobei die Elektrode (160) mit einem ersten elektrischen Potential beaufschlagt wird, und
dass die erste Walze (110) mit einem zweiten elektrischen Potential beaufschlagt wird, **dadurch gekennzeichnet, dass** zumindest eine zweite Elektrode (165), welche in dem Winkelbereich der zweiten Walze (120), auf dem die Kunststofffolie (101) aufliegt angeordnet ist, mit einem dritten elektrischen Potential beaufschlagt wird und dass die zweite Walze (120) mit einem vierten elektrischen Potential beaufschlagt wird, wobei die Polarität des dritten elektrischen Potentials gegensinnig zu dem ersten elektrischen Potential ist wobei die erste und die zweite Walze gegensinnig rotieren, so dass die Rückseite der Folie (101) mit dem dritten elektrischen Potential beaufschlagt wird.

## Claims

1. Stretching device (1) for stretching a plastics material film (101) in the transport direction (T) thereof,
having a first roller (SD) (110), via which the plastics material film (101) can be guided and which can be driven with a first drive and rotated at a first circumferential speed, and
having a second roller (FD) (120), via which the plastics material film (101) can be guided and which can be driven with a second drive and rotated at a second circumferential speed, wherein the second circumferential speed is greater than the first circumferential speed, wherein in the transport path of the plastics material film (101) the second roller (120) is arranged downstream of the first roller (110) so that the plastics material film can be stretched in the free region between the first and the second roller, wherein at least a first electrode (160) which can be acted on with a first electrical potential and which is arranged in the angular range of the first roller (110) on which the plastics material film (101) rests and/or upstream of this angular range, and in that the first roller (110) can be acted on with a second electrical potential, **characterized in that**
at least a second electrode (165) which can be acted on with a third electrical potential and which is arranged in the angular range of the second roller (120) on which the plastics material film (101) rests, and **in that** the second roller (120) can be acted on with a fourth electrical potential, wherein the polarity of the third electrical potential is opposed to the first electrical potential, wherein the first roller and the second roller rotate in opposing directions so that the rear side of the film (101) can be acted on with the third electrical potential.

2. Stretching device (100) according to claim 1,
**characterized in that**
at least a third electrode is provided, which can be acted on with a fifth electrical potential and which is arranged in the angular range of the second roller (120) on which the plastics material film (101) rests and downstream of the second electrode (165), wherein the fifth electrical potential has a polarity which is opposed in comparison with the third potential.

3. Stretching device (100) according to claim 1 or 2,
**characterized in that**
at least a fourth electrode which can be acted on with a sixth electrical potential is provided, wherein the fourth electrode is arranged downstream of the second roller (120).

4. Stretching device (100) according to any one of the preceding claims,
**characterized in that**
the spacing of at least one of the electrodes relative to the film (101) can be changed.

5. Stretching device (100) according to any one of the preceding claims,
**characterized in that**
the width of at least one of the electrodes can be varied.

6. Stretching device (100) according to any one of the preceding claims,
**characterized in that**
the angular position of at least one of the electrodes which are arranged in an angular range of one of the rollers on which the plastics material film rests can be changed.

7. Method for stretching a plastics material film (101) in the transport direction (T) thereof,
wherein the plastics material film (101) is guided via a first roller (SD) (110), wherein the roller (110) is driven with a first drive and rotates at a first circumferential speed, and
wherein the plastics material film (101) is guided via a second roller (FD) (120), wherein the roller (110) is driven with a second drive and rotates at a second circumferential speed, wherein the second circumferential speed is greater than the first circumferential speed, wherein in the transport path of the plastics material film (101) the second roller (120) is arranged downstream of the first roller (110) so that the plastics material film (101) is stretched in the free region between the first roller and the second roller, wherein the plastics material film (101) in the angular range of the first roller (110) on which the plastics material film (101) rests and/or upstream of this angular range is acted on by means of at least a first electrode (160) with an electrical field, wherein the electrode (160) is acted on with a first electrical potential, and
the first roller (110) is acted on with a second electrical potential, **characterized in that** at least a second electrode (165) which is arranged in the angular range of the second roller (120) on which the plastics material film (101) rests, is acted on with a third electrical potential and **in that** the second roller (120) is acted on with a fourth electrical potential, wherein the polarity of the third electrical potential is opposed to the first electrical potential, wherein the first roller and the second roller rotate in opposing directions so that the rear side of the film (101) is acted on with the third electrical potential.

## Revendications

1. Dispositif d'étirage (1) pour l'étirage d'un film plastique (101) dans son sens de transport (T)
avec un premier rouleau (SD) (110), par le biais duquel le film plastique (101) peut être guidé et qui peut être entraîné avec un premier entraînement et peut être tourné avec une première vitesse périphérique et
avec un second rouleau (FD) (120), par le biais duquel le film plastique (101) peut être guidé et qui peut être entraîné avec un second entraînement et tourné avec une seconde vitesse périphérique, dans lequel la seconde vitesse périphérique est supérieure à la première vitesse périphérique, dans lequel dans la voie de transport du film plastique (101), le second rouleau (120) est agencé en aval du premier rouleau (110) de sorte que le film plastique puisse être étiré dans la zone libre entre le premier et le second rouleau, dans lequel au moins une première électrode (160) qui peut être alimentée en un premier potentiel électrique et qui est agencée dans la plage angulaire du premier rouleau (110), sur lequel le film plastique (101) repose et/ou en amont de cette plage angulaire et en ce que le premier rouleau (110) peut être alimenté en un deuxième potentiel électrique, **caractérisé en ce que**
au moins une seconde électrode (165) qui peut être alimentée en un troisième potentiel électrique et qui est agencée dans la plage angulaire du second rouleau (120), sur lequel repose le film plastique (101) et **en ce que** le second rouleau (120) peut être alimenté en un quatrième potentiel électrique, dans lequel la polarité du troisième potentiel électrique est en sens inverse au premier potentiel électrique, dans lequel le premier et le second rouleau tournent en sens inverse de sorte que le côté arrière du film (101) puisse être alimenté en troisième potentiel électrique.

2. Dispositif d'étirage (100) selon la revendication 1,
**caractérisé en ce que**
au moins une troisième électrique est prévue, laquelle peut être alimentée en un cinquième potentiel électrique et qui est agencée dans la plage angulaire du second rouleau (120), sur lequel repose le film plastique (101) et en aval de la seconde électrode (165), dans lequel le cinquième potentiel électrique présente une polarité inversée par rapport au troisième potentiel.

3. Dispositif d'étirage (100) selon la revendication 1 ou 2,
**caractérisé en ce que**
au moins une quatrième électrode qui peut être alimentée en un sixième potentiel électrique, est prévue, dans lequel la quatrième électrode est agencée en aval du second rouleau (120).

4. Dispositif d'étirage (100) selon l'une quelconque des revendications précédentes,
**caractérisé en ce que**
la distance entre au moins une des électrodes et le film (101) est modifiable.

5. Dispositif d'étirage (100) selon l'une quelconque des revendications précédentes,
**caractérisé en ce que**
la largeur au moins d'une des électrodes est variable.

6. Dispositif d'étirage (100) selon l'une quelconque des revendications précédentes,
**caractérisé en ce que**
la position angulaire au moins d'une des électrodes qui sont agencées dans une plage angulaire d'un des rouleaux, sur lequel repose le film plastique, est modifiable.

7. Procédé d'étirage d'un film plastique (101) dans son sens de transport (T),
dans lequel le film plastique (101) est guidé par le biais d'un premier rouleau (SD) (110), dans lequel le rouleau (110) est entraîné avec un premier entraînement et tourne à une première vitesse périphérique et
dans lequel le film plastique (101) est guidé par le biais d'un second rouleau (FD) (120), dans lequel le rouleau (120) est entraîné avec un second entraînement et tourne à une seconde vitesse périphérique, dans lequel la seconde vitesse périphérique est supérieure à la première vitesse périphérique, dans lequel dans la voie de transport du film plastique (101), le second rouleau (120) est agencé en aval du premier rouleau (110) de sorte que le film plastique (101) soit étiré dans la zone libre entre le premier et le second rouleau, dans lequel le film plastique (101) est alimenté dans la plage angulaire du premier rouleau (110), sur lequel repose le film plastique (101) et/ou en amont de cette plage angulaire au moyen d'au moins une première électrode (160) en un champ électrique, dans lequel l'électrode (160) est alimentée en un premier potentiel électrique, et
en ce que le premier rouleau (110) est alimenté en un deuxième potentiel électrique, **caractérisé en ce qu'** au moins une seconde électrode (165) qui est agencée dans la plage angulaire du second rouleau (120), sur lequel repose le film plastique (101), en un troisième potentiel électrique et **en ce que** le second rouleau (120) est alimenté en un quatrième potentiel électrique, dans lequel la polarité du troisième potentiel électrique est en sens inverse au premier potentiel électrique, dans lequel le premier et le second rouleau tournent en sens inverse de sorte que le côté arrière du film (101) soit alimenté en troisième potentiel électrique.
